Europäisches Patentamt

(19) European Patent Office

Office européen des brevets

(11) Publication number: **0 104 864**
**B1**

(12) **EUROPEAN PATENT SPECIFICATION**

(45) Date of publication of patent specification: **06.07.88**  (51) Int. Cl.⁴: **G 02 B 6/44**

(21) Application number: **83305505.6**

(22) Date of filing: **20.09.83**

(54) Method of manufacturing an optical fibre ribbon structure.

(30) Priority: **23.09.82 GB 8227103**
**17.06.83 GB 8316492**

(43) Date of publication of application:
**04.04.84 Bulletin 84/14**

(45) Publication of the grant of the patent:
**06.07.88 Bulletin 88/27**

(84) Designated Contracting States:
**DE FR IT NL SE**

(56) References cited:
**DE-A-1 629 307**
**DE-A-2 314 313**
**DE-A-2 627 174**
**FR-A-2 393 327**
**GB-A-1 417 209**
**GB-A-1 592 191**
**GB-A-2 091 903**
**US-A-4 090 902**
**US-A-4 185 887**

**PATENTS ABSTRACTS OF JAPAN, vol. 7, no. 196 (P-219) 1341r, 26th August 1983; & JP - A - 58 93 006 (MITSUBISHI RAYON K.K.) 02-06-1983**

(73) Proprietor: **BICC Public Limited Company**
**21, Bloomsbury Street**
**London, WC1B 3QN (GB)**

(72) Inventor: **Keene, Ian William**
**98 Princes Road**
**Richmond Surrey (GB)**

(74) Representative: **Ross Gower, Edward Lewis et al**
**BICC Group Patents & Licensing Department**
**Network House 1 Ariel Way**
**London W12 7SL (GB)**

Courier Press, Leamington Spa, England.

## Description

This invention relates to manufacture of optical fibre ribbon structures for the transmission of the ultra-violet, visible and infra-red regions of the electromagnetic spectrum, which regions, for convenience, will hereinafter all be included in the generic term "light" and especially, but not exclusively, to the manufacture of optical fibre ribbon structures for use in the communications field adapted for transmission of light having a wavelength within the range 0.8 to 1.9 micrometres.

The invention is particularly concerned with manufacture of an optical fibre ribbon structure of the kind comprising a plurality of optical fibres arranged side by side and embedded in an elongate body of plastics material. An optical fibre ribbon structure of this kind is disclosed, for example, in GB-A-1592191.

DE-A-1629307 discloses a method of manufacturing a plastics tape or plastics film by applying the plastics material directly to a convex support surface, or to a supporting base passing over the convex support surface, and curing the plastics material by radiation. The specification suggests that a separating strip, e.g. of paper or plastics material, overlies or underlies the plastics tape during its manufacture, which separating strip is released from the plastics tape after it has been cured. The specification also states that the or each separating strip can be either an endless strip or band or it can run from an unreeling device on to a reeling device. The purpose of the separating strip is to shape the plastics tape being manufactured and assist in conveying the plastics tape from the conex support surface.

US-A-4090902 discloses a method of manufacturing an optical fibre ribbon structure comprising a plurality of optical fibres arranged side by side in the directions of their lengths and sandwiched between two plastics tapes or films. In this method, two tapes or films of plastic material are arranged to travel one above the other, the tapes or films having previously been heated in a continuous way to soften at least a central portion of each tape or film, a plurality of optical fibres are fed side by side between the two tapes or films and are laid on one of the tapes or films, the two advancing tapes or films with the optical fibres therebetween are pressed together and, after cooling, the required optical fibre ribbon structure is obtained. In a modification of this method of manufacture also described in this U.S. specification, each plastics tape or film is layered at its surface opposite to that intended to be heated with a "supporting" tape or film of a plastics material whose softening point is higher than that of the plastics material of the tape or film on which it is superimposed. The preliminary heating to which the surfaces of the plastics tapes or films are subjected is carried out at a temperature lower than the softening point of the plastics material of the "supporting" tapes or films. The "supporting" tapes or films have a mechanical sustaining function and, at the end of the process, may be removed.

It is an object of the present invention to provide an improved method of manufacturing an optical fibre ribbon structure of the aforesaid kind.

According to the invention, the improved method comprises causing a plurality of separate optical fibres to travel substantially side by side in the directions of their lengths with their axes lying in a substantially common plane; applying to the advancing optical fibres an overall coating of a curable plastics material to form a plastics coated optical fibre array, said curable plastics material being an acrylate, silicone rubber or any other plastics material that can be cured by ultra-violet radiation; feeding the plastics coated optical fibre array between a pair of advancing tapes, each of which is made of a material that is transparent to the ultra-violet radiation to be employed to cure the plastics material of the overall coating; subjecting the advancing taped plastics coated optical fibre array to an ultra-violet radiation to cure, the plastics material and cause it to bond both to the embedded optical fibres and lightly to the tapes; and peeling the tapes away from the optical fibre array once the curing is completed, whereby said optical fibre ribbon structure is obtained.

At least one flexible elongate reinforcing element may be caused to travel substantially side by side with the plurality of separate optical fibres in the directions of their lengths with the axes of the optical fibres and of the reinforcing element or elements lying in a substantially common plane and the overall coating of plastics material may be applied to the advancing optical fibres and to the reinforcing element or elements to form a plastics coated reinforced optical fibre array, whereby resulting in a final optical fibre ribbon structure which is reinforced.

Each tape applied to the advancing plastics coated unreinforced or reinforced optical fibre array is preferably made of oriented polyethylene terephthalate.

Preferably, adjacent optical fibres are in continuous contact with each other and each separate optical fibre has an outermost coating of an acrylate. At least one of the optical fibres may have a coating differing in colour from that of the other optical fibre or each of the other optical fibres of the ribbon structure to provide for ready identification of any optical fibre.

Where a reinforced optical fibre ribbon structure is required, preferably at least two flexible elongate reinforcing elements are caused to travel substantially side by side with the plurality of separate optical fibres and, preferably also, the reinforcing elements are uniformly spaced across the width of the optical fibre array. In a preferred embodiment, the plurality of separate optical fibres travel between two flexible elongate reinforcing elements.

The or each flexible elongate reinforcing element preferably is made of a metal or metal alloy, stainless steel being preferred, but in applications where the presence of metal or metal alloy is not desirable, the or each reinforcing element may be made of a non-metal, such as polyethylene terephthalate. The or each flexible elongate reinforcing element may have an overall diameter substantially equal to that of each of the optical fibres but, preferably, the or each reinforcing element has a diameter substantially shorter than that of each of the optical fibres.

The tapes serve to maintain the positions of the embedded optical fibres, and when present of the embedded reinforcing element or elements, relative to one another substantially constant prior to curing of the plastics material. Since each of the tapes is peeled from the optical fibre array after the plastics material of the overall coating has been cured, the tapes thereby forming no part of the final optical fibre ribbon structure, any deleterious thermal and/or mechanical effects that the tapes may otherwise have had on the transmission properties of the optical fibres are eliminated. Moreover, each tape may be wider than the array of optical fibres because the necessity to cut or slit the tapes with the inherent risk of damage to the optical fibres no longer arises.

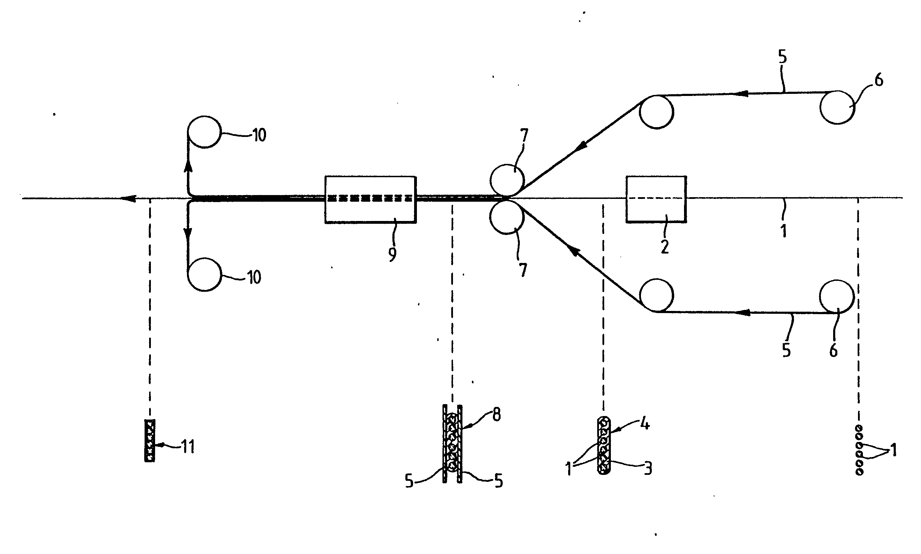

The invention is further illustrated by a description, by way of example, of the preferred method of manufacturing an optical fibre ribbon structure with reference to the accompanying drawing which shows a schematic representation of the preferred method.

Referring to the drawing, six separate optical fibres 1, each having an outer coating of an acrylate, are caused to travel from supply spools (not shown) substantially side by side in the directions of their lengths with their axes lying in a substantially common plane through a bath 2 where an overall coating 3 of an acrylate is applied to the advancing optical fibres to form an acrylate coated optical fibre array 4. Downstream of the bath 2, a pair of tapes 5 of oriented polyethylene terephthalate being drawn from supply spools 6 are fed, with the acrylate coated optical fibre array 4, between a pair of pinch rolls 7 which urge the tapes into contact with the opposite major faces of the acrylate coated optical fibre array. The advancing taped acrylate coated optical fibre array 8 then passes through an oven 9 where the acrylate in which the optical fibres are embedded is cured by ultraviolet radiation to cause the acrylate to bond both to the embedded acrylate coated optical fibres 1 and lightly to the tapes 5. Downstream of the oven 9, the tapes 5 are peeled away from the optical fibre array on to take-up spools 10 to form an optical fibre ribbon structure 11.

It will be noted that, because the tapes 5 form no part of the final optical fibre ribbon structure 11, each tape can be substantially wider than the array of optical fibres because no cutting or slitting of the tapes is required during manufacture of the ribbon structure.

**Claims**

1. A method of manufacturing an optical fibre ribbon structure (11) of the kind comprising a plurality of optical fibres (1) arranged side by side and embedded in an elongate body of plastics material (3), which method comprises causing a plurality of separate optical fibres (1) to travel substantially side by side in the directions of their lengths with their axes lying in a substantially common plane; applying to the advancing optical fibres an overall coating (3) of a curable plastics material to form a plastics coated optical fibre array (4), said curable plastics material being an acrylate, silicone rubber or any other plastics material that can be cured by ultra-violet radiation; feeding the plastics coated optical fibre array (4) between a pair of advancing tapes (5), each of which is made of a material that is transparent to the ultra-violet radiation to be employed to cure the plastics material of the overall coating; subjecting the advancing taped plastics coated optical fibre array (8) to an ultra-violet radiation to cure the plastics material and cause it to bond both to the embedded optical fibres and lightly to the tapes; and peeling the tapes (5) away from the optical fibre array once the curing is completed, whereby said optical fibre ribbon structure (11) is obtained.

2. A method as claimed in Claim 1, wherein at least one flexible elongate reinforcing element is caused to travel substantially side by side with said plurality of separate optical fibres (1) in the directions of their lengths with the axes of the optical fibres and of the reinforcing element lying in a substantially common plane; and wherein said overall coating (3) of a plastics material is applied to the advancing optical fibres and to the advancing reinforcing element to form a plastics coated reinforced optical fibre array, whereby resulting in a final optical fibre ribbon structure which is reinforced.

3. A method as claimed in Claim 2, wherein at least two flexible elongate reinforcing elements are caused to travel substantially side by side with the plurality of separate optical fibres (1).

4. A method as claimed in Claim 3. wherein the reinforcing elements are uniformly spaced across the width of the optical fibre array.

5. A method as claimed in one of Claims 2 to 4, wherein the or each flexible elongate reinforcing. element is made of a metal or metal alloy.

6. A method as claimed in one of the preceding Claims, wherein each tape (5) is made of oriented polyethylene terephthalate.

7. A method as claimed in one of the preceding Claims, wherein adjacent optical fibres (1) are in continuous contact with each other and each separate optical fibre has an outermost coating of an acrylate.

8. A method as claimed in one of the preceding Claims, wherein at least one of the optical fibres has a coating differing in colour from that of the other optical fibre or each of the other optical fibres of the ribbon structure.

## Patentansprüche

1. Verfahren zur Herstellung einer optischen Faserbandstuktur (11) mit mehreren optischen Fasern (1) welche seitlich nebeneinander angeordnet und in einem länglichen Körper aus Kunststoffmaterial (3) eingebettet sind, gekennzeichnet durch folgende Verfahrensschritte: Herbeiführung einer Längsbewegung mehrerer separater optischer Fasern im wesentlichen seitlich nebeneinander in ihren Längsrichtungen, wobei deren Achsen in einer im wesentlichen gemeinsamen Ebene liegen; Aufbringen einer Gesamtummantelung (3) aus einem aushärtbaren Kunststoffmaterial auf die herangeführten optischen Fasern, um eine mit einem Kunststoff ummantelte optische Faseranordnung (4) auszubilden, wobei das aushärtbare Kunststoffmaterial ein Acrylat, Silicongummi oder irgendein anderes Kunststoffmaterial ist, das durch Ultraviolettstrahlung aushärtbar ist; Zuführen der kunststoffummantelten optischen Faseranordnung (4) zwischen ein Paar von sich bewegenden Bändern (5), welche jeweils aus einem Material bestehen, das für die zum Aushärten des Kunststoffmaterials der Gesamtummantelung aufzubringende Ultraviolettstrahlung durchlässig ist; Aussetzen der mit den sich bewegenden Kunststoffbändern versehenen, kunststoffummantelten optischen Faseranordnung (8) einer ultravioletten Strahlung zur Aushärtung des Kunststoffmaterials und zur Verbindung desselben sowohl mit den eingebetteten optischen Fasern als auch geringfügig mit den Bändern; und Abziehen der Bänder von der optischen Faseranordnung nach Beendigung der Aushärtung, wobei die optische Faserbandstruktur (11) erhalten wird.

2. Verfahren nach Anspruch 1, wobei zumindest ein flexibles längliches Verstärkungselement im wesentlichen seitlich neben den mehreren separaten optischen Fasern (1) in deren Längsrichtungen zugeführt wird, wobei die Achsen der optischen Fasern und des Verstärkungselementes im wesentlichen in einer gemeinsamen Ebene liegen; und wobei die Gesamtummantelung (3) aus einem Kunststoffmaterial auf die sich bewegenden optischen Fasern und das sich bewegende Verstärkungselement aufgebracht wird, um eine kunststoffummantelte, verstärkte optische Faseranordnung auszubilden, wobei als Endergebnis eine verstärkte optische Faserbandstruktur erhalten wird.

3. Verfahren nach Anspruch 2, wobei zumindest zwei flexible längliche Verstärkungselemente im wesentlichen seitlich neben den mehreren separaten optischen Fasern (1) geführt werden.

4. Verfahren nach Anspruch 3, wobei die Verstärkungselemente über die Breite der optischen Faseranordnung einen gleichbleibenden Abstand aufweisen.

5. Verfahren nach einem der Ansprüche 2 bis 4, wobei das oder jedes der flexiblen länglichen Verstärkungselemente aus Metall oder einer Metallegierung besteht.

6. Verfahren nach einem der vorhergehenden Ansprüche, wobei jedes Band (5) aus einem gereckten Polyethylenterephthalat besteht.

7. Verfahren nach einem der vorhergehenden Ansprüche, wobei benachbarte optische Fasern (1) ständig in Kontakt zueinander stehen und wobei jede separate optische Faser eine äußerste Ummantelung aus einem Acrylat aufweist.

8. Verfahren nach einem der vorhergehenden Ansprüche, wobei zumindest eine der optischen Fasern eine Ummantelung aufweist, welche sich in der Farbe von der der anderen optischen Fasern oder von jeder der anderen optischen Fasern der Faserbandstruktur unterscheidet.

## Revendications

1. Procédé de fabrication d'une structure (11) de ruban de fibres optiques du genre comprenant une pluralité de fibres optiques (1) disposées côte-à-côte et incorporées dans un corps allongé de matière plastique (3) ledit procédé consistant à faire se déplacer sensiblement côte-à-côte, dans le sens de leur longueur, une pluralité de fibres optiques (1) séparées, leurs axes étant disposés dans un plan sensiblement commun; à appliquer aux fibres optiques en déplacement vers l'avant un revêtement (3) général d'un matériau plastique durcissable en vue de former un faisceau (4) de fibres optiques, ledit matériau plastique durcissable étant un acrylate, un caoutchouc de silicone ou n'importe quel matériau plastique qui peut durcir sous l'effet des rayons ultra-violets; à transporter le faisceau (4) de fibres optiques revêtu de matière plastique entre une paire de rubans (5) se déplaçant vers l'avant, dont chacun est fabriqué avec un matériau qui est transparent à la radiation ultra-violette qui doit être employée pour durcir le matériau plastique du revêtement général; à soumettre à l'agencement (8) de fibres optiques revêtu de matière plastique, muni de rubans et en cours d'avance à une source de radiations ultra-violettes pour durcir le matériau plastique et le faire adhérer à la fois aux fibres optiques incorporées et légèrement aux rubans; et à décoller les rubans (5) en les séparant du faisceau de fibres optiques, une fois achevée le durcissement. une structure (11) de ruban de fibres optiques étant ainsi obtenue.

2. Procédé salon la revendication 1, dans lequel on fait avancer au moins un élément de renforcement allongé souple, sensiblement côte à côte avec ladite pluralité de fibres optiques séparées (1) dans le sens de leur longueur, les axes des fibres optiques et de l'élément de renforcement étant disposé dans un plan sensiblement commun; et dans lequel ledit revêtement (3) général de matériau plastique est appliqué sur les fibres optiques en cours d'avance et sur l'élément de renforcement en cours d'avance pour former un faisceau de fibres optiques renforcé revêtu de matière plastique, en obtenant ainsi une structure finale de ruban de fibres optiques qui est renforcée.

3. Procédé selon la revendication 2, dans lequel on fait avancer au moins deux éléments de renforcement allongés souples sensiblement côte-à-côte avec la pluralité de fibres optiques (1) séparées.

4. Procédé selon la revendication 3, dans lequel les éléments de renforcement sont espacés uniformément en travers de la largeur du faisceau de fibres optiques.

5. Procédé selon une des revendications 2 à 4, dans lequel l'élément de renforcement allongé souple ou chacun de ces éléments de renforcement allongés souples est fabriqué en métal ou en alliage métallique.

6. Procédé selon un des revendications précédentes, dans lequel chaque ruban (5) est fabriqué avec du téréphtalate de polyéthylène orienté.

7. Procédé selon une des revendications précédentes, dans lequel des fibres optiques (1) adjacentes sont en contact continu entre elles et dans lequel chaque fibre optique séparée comporte un revêtement d'acrylate sur sa partie externe.

8. Procédé selon une des revendications précédentes, dans lequel au moins une des fibres optiques a un revêtement de couleur différente de celle de l'autre fibre optique ou de chacune des autres fibres optiques de la structure de ruban.